# EUROPÄISCHE PATENTSCHRIFT

(11) **EP 2 169 084 B1**
(45) Veröffentlichungstag und Bekanntmachung des Hinweises auf die Patenterteilung: **09.01.2013**
(21) Anmeldenummer: 09008951.7
(22) Anmeldetag: 09.07.2009
(51) Int. Cl.: C21D 1/40, C21D 1/42, C21D 8/04, C21D 9/62, C21D 9/48, C21D 9/60, C21D 9/46, C21D 9/52, C21D 9/56

(54) **Verfahren zur Herstellung eines Formbauteils mit Bereichen unterschiedlicher Festigkeit aus Kaltband**
Method for manufacturing a moulding with areas of different strength made of cold strip
Procédé de fabrication d'un composant de formage produit en bande froide doté de zones ayant des résistances différentes

(30) Priorität: 25.09.2008 DE 102008049178
(43) Veröffentlichungstag der Anmeldung: 31.03.2010
(73) Patentinhaber: Bilstein GmbH & Co. KG, 58119 Hagen (DE)
(72) Erfinder: Krech, Dieter, 58119 Hagen (DE)
(74) Vertreter: Kesselhut, Wolf

(56) Entgegenhaltungen:
- EP-B1- 0 575 411
- DE-B- 1 160 815
- US-A- 4 527 032
- US-B1- 7 262 392

## Beschreibung

Die Erfindung betrifft ein Verfahren zur Herstellung eines Formbauteils mit Bereichen unterschiedlicher Festigkeit aus Kaltband gemäß dem Oberbegriff von Anspruch 1.

Aufgrund der in den letzten Jahren ständig steigenden Energiekosten besteht ein großes Interesse daran, das Gesamtgewicht insbesondere von Kraftfahrzeugen insgesamt zu reduzieren. Die Karosserie stellt hierbei unter den Baugruppen eines Fahrzeuges mit ca. 25 % Gewichtsanteil den größten und somit wichtigsten Ansatzpunkt zur Gewichtsreduktion bei gleichzeitiger Beibehaltung der Steifigkeit und Betriebsfestigkeit sowie dem Crashverhalten und dem akustischen Komfort dar.

Auf der anderen Seite führen ständig neue gesetzliche Vorgaben zur Steigerung der Sicherheit sowie der Wunsch nach mehr Komfort dazu, dass sich das Fahrzeuggewicht bei vergleichbaren Modellen in den letzten 20 Jahren immer weiter erhöht hat.

Um die beiden gegenläufigen Tendenzen miteinander in Einklang zu bringen, werden in der Automobilfertigung Stähle mit hoch- und höchstfesten Güten sowie zusammengefügte Baugruppen - sogenannte "Tailored Blanks" - eingesetzt, bei welchen die erforderliche Festigkeit in besonders hoch belasteten Bereichen eines Bauteils dadurch erhalten wird, dass die Materialdicke in diesen Bereichen durch Aufschweißen von maßgeschneiderten Blechen lokal erhöht wird.

Aus der DE 1 160 815 B ist es bekannt, kaltgewalzte oder vergütete Stahl- oder Nichteisenmetallbänder nach einer örtlichen begrenzten Wärmebehandlung der Biegezonen und anschließendem Abkühlen durch Abkanten zu profilieren.

Die EP 0 575 411 B1 beschreibt eine kontinuierliche Produktionslinie zur Herstellung teilweise gehärteter dünner Metallblech-Profilprodukte aus einem aufgewickelten Metallstreifen, wobei der Metallstreifen, um ihm ein Profil zu verleihen, vorerst gewalzt wird. Der profilierte Metallstreifen wird weiterhin mittels einer Heizeinheit, welche eine diskontinuierlich elektrisch betriebene Heizspule umfasst, deren Form dem Querschnittsbereich des durch die Walze erzeugten Profils angepasst ist, erhitzt und abschließend durch eine Abschreckeinheit abgekühlt.

Weiterhin ist es aus der DE 198 26290 B4 bekannt, bei der Herstellung von Sandwich-Bauteilen mit zwei oder mehr Schichten, die beiden zu verbindenden Bleche vor der gemeinsamen Umformung mit einem Klebstoff zu beschichten, der während des Umformvorgangs dafür sorgt, dass die Bleche aufeinander geleiten. Die zuvor erwähnten Bleche werden in der Fachsprache auch als "Bonded Blanks" bezeichnet.

Die zuvor erwähnte Anpassung der Materialdicke mittels "Tailored Blanks" oder auch durch "Bonded Blanks" führt dann dazu, dass sich das Gewicht des Bauteils und damit letztendlich das Gewicht der Fahrzeugkarosserie bei gleicher Festigkeit und verbessertem Crashverhalten insgesamt verringert, da die Materialdicke vereinfacht ausgedrückt in den gering belasteten Bereichen verringert werden kann.

So besteht beispielsweise bei den bei PKWs eingesetzten B-Säulen, die die Verbindung zwischen Dach- und Bodenkonstruktion der Karosserie herstellen, das Erfordernis, dass diese im Falle eines Überschlages nur geringe Intrusionen zulassen, um die Insassen des Fahrzeugs hinreichend vor Verletzungen zu schützen.

Hierbei ist es in Hinblick auf das Gesamtgewicht und Crashverhalten des Fahrzeugs von Vorteil, wenn im unteren Drittel der B-Säule ein Stahl, z.B. ein mikrolegierter Tiefziehstahl mit einer Festigkeit im Bereich von z.B. 500 MPa und Restbruchdehnungen von ca. 15 % zum Einsatz gelangt, wohingegen im oberen Drittel bevorzugt ein pressgehärteten Stahl, z.B. 22MnB5, mit einer höheren Festigkeit von z.B. 1500 MPa verwendet wird. Durch die zuvor beschrieben Ausgestaltung der B-Säulen mit Stählen unterschiedlicher Festigkeit wird im Falle eines Überschlages sichergestellt, dass sich das Material der B-Säule im oberen Bereich der Karosserie nur geringfügig verformt, wodurch ein ausreichender Überlebensraum für die Insassen nach oben hin bereitgestellt wird. Andererseits wird durch die geringe Festigkeit und die damit einhergehende hohe Elastizität bei einem Seitenaufprall ein ausreichender Energieabbau gewährleistet, der wiederum dafür sorgt, dass der Impulsübertrag auf die Insassen - und damit das Verletzungsrisiko - in vorteilhafter Weise verringert wird.

Da die Blechdicke für den pressgehärteten Stahl im oberen Bereich des Bauteils aufgrund der um den Faktor 3 höheren Festigkeit auf z.B. lediglich 1,55 mm reduziert werden kann, ergibt sich im Vergleich zu einem Formbauteil, welches durchgängig aus kalt umgeformtem Stahl des unteren Bereichs gefertigt wird ein insgesamt verringertes Gesamtgewicht der B-Säule.

Allerdings ist die Herstellung der zuvor beschriebenen Formbauteile unter Einsatz von "Tailored Blanks" sowie auch "Bonded Blanks" vergleichsweise aufwändig, da hierfür zusätzliche Arbeitsschritte erforderlich sind, die die Herstellungskosten verteuern und die im Falle eines Verklebens der Bleche mitunter erst vorgenommen werden können, nachdem das Grundbauteil bereits in die Rohkarosserie eingeschweißt wurde. Ein weiterer Nachteil ist darin zu sehen, dass sich durch die eingesetzten Verstärkungsbleche die Materialdicke erhöht, wodurch der Raumbedarf der Bauteile vergrößert und entsprechend der im Innenraum einer Karosserie zur Verfügung stehende Platz verkleinert wird.

Demgemäß ist es eine Aufgabe der vorliegenden Erfindung, ein Verfahren zu schaffen, mit welchem sich Formbauteile mit Bereichen unterschiedlicher Festigkeit in produktionstechnisch einfacher Weise zu verringerten Kosten aus Kaltband herstellen lassen.

Diese Aufgabe wird erfindungsgemäß durch die Merkmale von Anspruch 1 gelöst.

Weitere Merkmale der Erfindung sind in den Unteransprüchen 2-6 enthalten.

Nach dem erfindungsgemäßen Verfahren wird ein Formbauteil, wie z.B. eine zuvor beschriebene B-Säule eines PKWs, dadurch erhalten, dass Kaltband mit einer im Wesentlichen homogenen Dicke und Festigkeit, welches in bekannter Weise durch ein oder mehrmaliges Kaltwalzen, Rekristallisationsglühen und Abkühlen von Stahlband erhalten wird, durch einen mechanischen Umformprozess, z.B. einen Druckumformungsprozess, einen Tiefziehprozess oder einen Streckziehprozess in die gewünschte Form des Bauteils überführt.

Um an dem Formbauteil nach der Umformung Bereiche unterschiedlicher Festigkeit zu erhalten, wird das Kaltband nach dem Abkühlen und vor dem mechanischen Umformprozess in einem ersten Bereich, der im Endbauteil einem Bereich mit einer geringeren Festigkeit entspricht, über eine Energiezufuhreinrichtung lokal mit thermischer Energie beaufschlagt.

Durch das lokale Erhitzen des Kaltbandes im ersten Bereich wird die Materialstruktur des Kaltbandmaterials - ähnlich wie beim Rekristallisationsglühen - hierbei dahingehend verändert, dass die sich beim Kaltwalzen gebildeten Kaltverfestigungen im Material zumindest teilweise beseitigt werden. Dies führt wiederum dazu, dass die Festigkeit entsprechend herabgesetzt und die Verformbarkeit d.h. die Streck- und Dehnfähigkeit des Materials entsprechend lokal erhöht werden, wodurch diese Bereiche in dem sich anschließenden mechanischen Umformprozess gegenüber den übrigen Bereichen in vorteilhafter Weise leichter und mit einem größeren Umformgrad umgeformt werden können.

Anders ausgedrückt besitzt die zuvor beschriebene Ausführungsform des erfindungsgemäßen Verfahrens den Vorteil, dass die Formbauteile aus Kaltband mit einer im Wesentlichen konstanten Materialstärke gefertigt werden können, wobei in den beim mechanischen Umformprozess kritischen Bereichen der Bauteile, in denen z.B. ein sehr hoher Umformgrad erforderlich ist, die Festigkeit des ansonsten hochfesten Kaltbandmaterials gezielt lokal verringert und dementsprechend die Streckdehnungsgrenze erhöht werden kann. Hierdurch lassen sich in vorteilhafter Weise auch Bauteile fertigen, die aufgrund ihrer hohen Grundfestigkeit des kalt verfestigten Kaltbandmaterials andernfalls nur eine sehr geringe mechanische Umformung erlauben und aus diesem Grunde nicht in die gewünschte räumliche Form des Endbauteils überführt werden können.

Ein weiterer Vorteil des erfindungsgemäßen Verfahrens ist darin zu sehen, dass die ersten Bereiche verringerter Festigkeit mit vergleichsweise geringem Aufwand bereits bei der Herstellung des Kaltbandes fortlaufend in dieses eingebracht werden können und das Kaltband im Anschluss daran wieder zu einem Coil aufgerollt werden kann. Die Coils können dann in bekannter Weise bequem mit einem LKW zu den jeweiligen Weiterverarbeitungsbetrieben transportiert werden, in denen das Kaltband wiederum vom Coil abgerollt und fortlaufend z.B. einer Presse zugeführt werden kann, welche den mechanischen Umformprozess durchführt.

Die Energiezufuhreinrichtung umfasst bevorzugt elektromagnetische Spulen, die nahe der Oberfläche auf wenigstens einer Seite des Kaltbandes angeordnet sind und das abgekühlte Kaltband im ersten Bereich induktiv oder konduktiv erwärmen. Durch den Einsatz von Spulen ergibt sich der Vorteil, dass der Grad der Erwärmung sowie auch die Haltezeit sehr einfach über die Größe des den Spulen zugeführten Stroms sowie auch die Dauer der Stromzufuhr mit bekannten Steuerungseinrichtungen vergleichsweise kostengünstig verändert werden können.

Hierbei ist es von Vorteil, wenn eine Vielzahl von Spulen in einem Array angeordnet sind, welches sich in Querrichtung zumindest über einen Teil der Breite des Kaltbandes hinweg erstreckt. Um das abgekühlte Kaltband im ersten Bereich lokal induktiv oder auch konduktiv zu erwärmen, werden die Spulen jeweils individuell entsprechend der Form des ersten Bereichs für eine vorgegebene Zeitdauer mit einer Stromquelle verbunden. Die Anordnung von einer Vielzahl von Spulen in einem Array bietet den Vorteil, dass unterschiedliche Bereiche des Kaltbandmaterials durch Ein- und Ausschalten der Spulen des Arrays vergleichsweise Einfach und mit unterschiedlichen Temperaturen erwärmt werden können, und zudem die Kontur des zu erwärmenden ersten Bereichs leicht verändert werden kann, wodurch die Möglichkeit eröffnet wird, mit ein und demselben Spulen Array in Transportrichtung des Kaltbandes betrachtet unterschiedlich geformte erste Bereiche mit verringerter Festigkeit für unterschiedliche Endbauteile zu erzeugen.

Nach einer weiteren Ausführungsform der Erfindung kann die Energiezufuhreinrichtung einen Brenner, z.B. einen Gasbrenner, umfassen, der bevorzugt eine Vielzahl von nahe der Oberfläche des abgekühlten Kaltbandes angeordnete Düsen aufweist, die bevorzugt ebenfalls in einem Array mit mehreren Düsenreihen in Querrichtung des Kaltbandes angeordnet sind und in gleicher Weise wie die zuvor erwähnten Spulen individuell für eine vorgegebene Zeitdauer eingeschaltet werden, um das Kaltband nach dem Abkühlen im ersten Bereich lokal zu erhitzen.

Nach einer weiteren Ausführungsform des erfindungsgemäßen Verfahrens wird das Kaltband nach dem Abkühlen in einem Ofen entweder insgesamt oder bevorzugt auch nur in einem ausgewählten Teilbereich erneut erwärmt, was z.B. in einem bekannten Durchlaufofen oder durch Induktionsspulen bis in den Bereich der Rekristallisationstemperatur von ca. 700 °C erfolgen kann. Im Anschluss daran wird das hierbei bevorzugt von einem Coil abgewickelte heiße Kaltband durch eine Energiezufuhreinrichtung, welche in diesem Falle eine Kühleinrichtung umfasst, in einem zweiten Bereich lokal mit einem Kühlmedium beaufschlagt, um die Festigkeit im zweiten Bereich lokal zu erhöhen. Im Anschluss daran erfolgt dann wiederum der mechanische Umformungsprozess, bei welchem das im Wesentlichen ebene Kaltband mit den zweiten Bereichen erhöhter Festigkeit durch Abtrennen und mechanisches Umformen in bekannter Weise in das endgültige Formbauteil überführt wird.

Durch diese Ausführungsform des erfindungsgemäßen Verfahrens wird in Analogie zu der ersten Ausführungsform des Verfahrens ein Kaltband erhalten, welches nach dem Aufrollen zu einem Coil und Transport sehr bequem zu einem entsprechenden Umformbetrieb transportiert werden kann, in welchem dann der entsprechende mechanische Umformprozess fortlaufend durchgeführt werden kann, um aus dem Kaltband eine Vielzahl von Formbauteilen zu erhalten, die im Wesentlichen eine konstante Materialstärke aufweisen, jedoch in den zweiten Bereichen eine gegenüber dem übrigen Material erhöhte Festigkeit besitzen. Die Dicke des Kaltbandes liegt hierbei unterhalb von 1,8 mm, bevorzug in einem Bereich zwischen 1,2 und 1,5 mm, wodurch sich in der Praxis in den entsprechenden Bereichen eine gute partielle Erwärmbarkeit auf die gewünschte Temperatur über den gesamten Dicken-Querschnitt des Kalbandes hinweg ergibt,

Nach einer weitern Ausführungsform des erfindungsgemäßen Verfahrens umfasst die Kühleinrichtung eine Düsenanordnung, die das erwärmte Kaltband im zweiten Bereich lokal mit einem Kühlgas, insbesondere mit gekühlter Luft und/oder mit einer Kühlflüssigkeit, insbesondere mit Wasser oder Öl, beaufschlagt. Die Düsenanordnung kann hierbei ebenfalls in einem Array angeordnet sein, wodurch sich die im Zusammenhang mit der zuvor beschriebenen Ausführungsform eines Arrays von elektromagnetischen Spulen erwähnten Vorteile ergeben.

Bei den zuvor beschriebenen Ausführungsformen der Erfindung wird das Kaltband bevorzugt von einem Coil abgewickelt und mit einer insbesondere konstanten Geschwindigkeit bewegt. Die Energiezufuhreinrichtung, d.h. die Wärmequelle in der zuerst beschriebenen Ausführungsform, bzw. die Kühleinrichtung in der zuletzt beschrieben alternativen Ausführungsform der Erfindung ist hierbei gegenüber dem Kaltband ortsfest angeordnet und beaufschlagt das Kaltband entsprechend getaktet mit thermischer Energie, d.h. mit Wärme oder mit dem Kühlmedium.

Alternativ kann es vorgesehen sein, dass die Energiezufuhreinrichtung über eine Fördereinrichtung mit dem Kaltband mitbewegt wird, um das laufende Kaltband lokal mit thermischer Energie zu beaufschlagen. Die Fördereinrichtung kann beispielsweise ein endloses umlaufendes Zugmittel, z.B. eine umlaufende Kette oder einen Zahnriemen oder dergleichen umfassen, an welchem die Energiezufuhreinrichtung aufgenommen ist. Das Zugmittel läuft dabei im Falle von einem Array von Düsen in vorteilhafter Weise mit der gleichen Geschwindigkeit wie das Kaltband um.

Als bevorzugtes Ausgangsmaterial wird bei der ersten Ausführungsform des Verfahrens mikrolegiertes Kaltband der Güte ZE 800 oder ZE 1000 verwendet. Dabei wird das zuvor gewalzte und abgekühlte hochfeste Kaltband bevorzugt mittels der beschriebenen Energiezufuhrmöglichkeiten kurzzeitig auf eine Temperatur im Bereich von 650 °C - 850°C lokal erhitzt und wieder abgekühlt, wodurch eine örtliche Rekristallisation in Abhängigkeit von der einzustellenden Zielfestigkeit für Bauteilbereiche mit einer hohen Umformbeanspruchung, z.B. für Tiefziehbereiche, erhalten wird.

Als Ausgangsmaterial für die zweite Ausführungsform des Verfahrens wird beispielhaft vorzugsweise Federbandstahl der Güte C67 verwendet. Auch hierbei wird das zuvor gewalzte, abgekühlte Kaltband, welches eine Dicke von bis zu 1,5mm besitzt, bevorzugt entweder insgesamt in einem Durchlaufofen oder auch kurzzeitig lokal, z.B. induktiv oder konduktiv durch Spulen, auf eine Temperatur im Bereich von 750°C - 900°C erhitzt. Im Anschluss daran wird das insgesamt erwärmte Kaltband in den Bereichen mit einer gewünschten hohen Festigkeit, bzw. die lokal erhitze Stelle durch eine zuvor beschriebene Kühleinrichtung mit einer vorgegebenen Kühlrate über einen Zeitraum von z.B. 5 bis 20 Sekunden hinweg abgekühlt, um Härte- und Zwischenstufengefüge für Bauteile mit hohen Verschleißanforderungen, wie z.B. Kugellaufbahnen von Sitzschienen, zu erhalten.

Die Erfindung wird nachfolgend mit Bezug auf die Zeichnungen anhand von bevorzugten Ausführungsformen beschrieben.

### In den Zeichnungen zeigen:

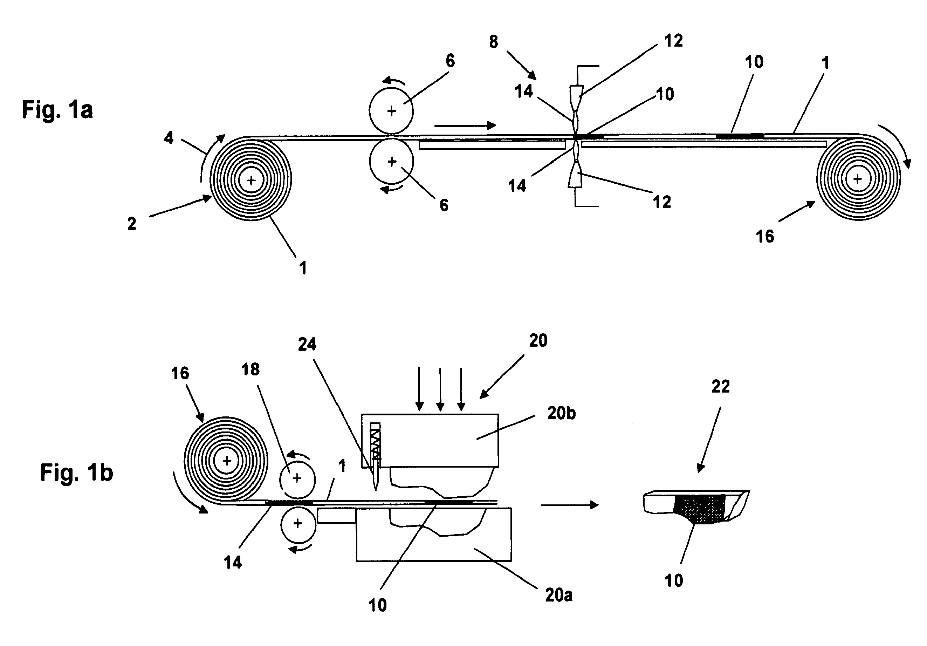

- Fig. 1a: eine schematische Seitendarstellung des erfindungsgemäßen Verfahrens, bei welchem die ersten Bereiche geringerer Festigkeit auf dem von einem Coil abgewickelten Kaltband durch einen oberhalb und unterhalb des Kaltbandes angeordneten Brenner erzeugt werden und das Kaltband anschließend wieder zu einem Coil aufgewickelt wird,
- Fig. 1b: die Weiterverarbeitung des Coils von Fig. 1b mit den eingebrachten ersten Bereichen in einer mechanischen Umformeinrichtung, in welcher die entsprechenden ersten Bereiche des Kaltbandes vom Kaltband fortlaufend durch ein Schlagmesser abgetrennt und in eine entsprechende Form in das fertige Formbauteil überführt werden,

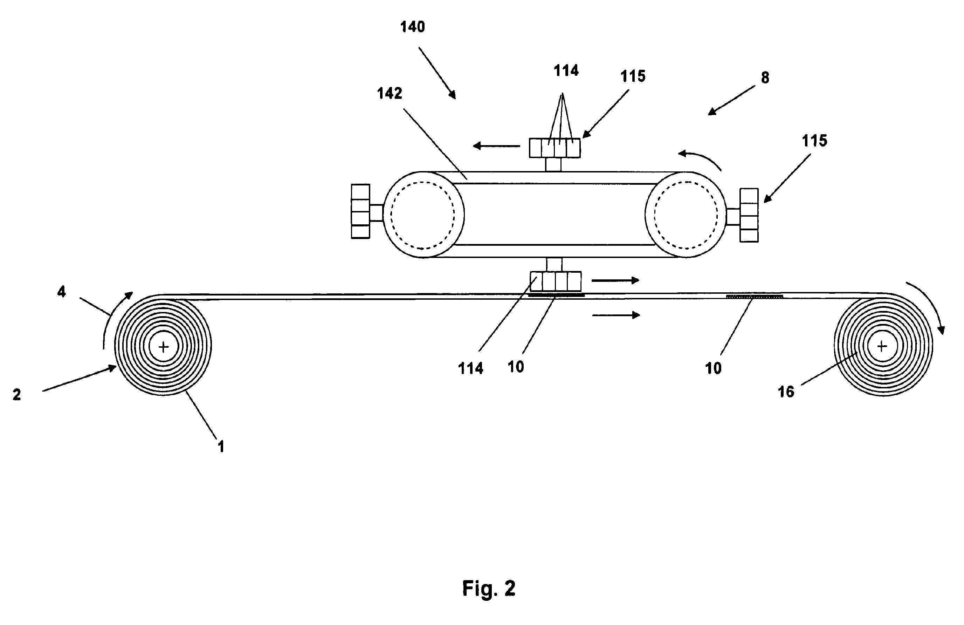

- Fig. 2: eine weitere Ausgestaltung des erfindungsgemäßen Verfahrens, bei welchem im ersten Bereich Wärmeenergie über eine elektromagnetische Spulenanordnung in das von einem Coil abgewickelte und auf ein weiteres Coil aufgewickelte Kaltband eingebracht wird, welche an einem endlosen Zugmittel in Form eines Riemens über das laufende Kaltband hinweg bewegt wird,

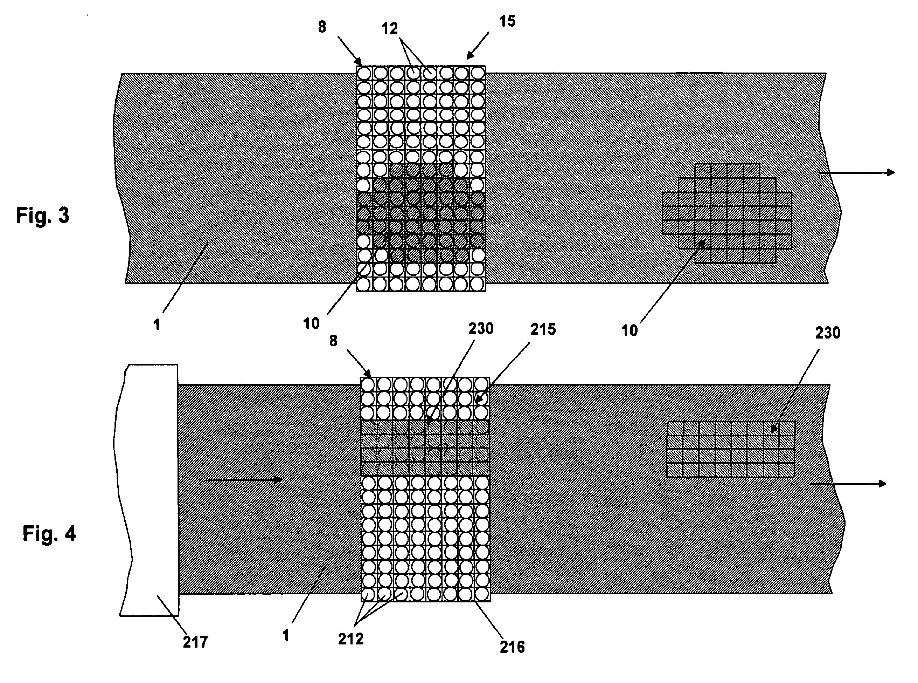

- Fig. 3: eine schematische Aufsicht auf ein Kaltband mit einer sich über die Breite des Kaltbandes hinweg erstreckenden Energiezufuhreinrichtung in Form eines Spulenarrays, welches in dem ebenfalls angedeuteten ersten Bereich Wärmeenergie lokal auf das abgekühlte Kaltband überträgt, und
- Fig. 4: eine schematische Aufsicht auf ein erhitztes Kaltband, welches gemäß einer weiteren Ausführungsform des erfindungsgemäßen Verfahrens durch eine Energiezufuhreinrichtung in Form einer als Array ausgebildeten Kühleinrichtung in einem vorgegebenen Takt gekühlt wird, um einen zweiten Bereich erhöhter Festigkeit auf dem Kaltband zu erzeugen.

Wie in Fig. 1a und b gezeigt ist, wird bei einem erfindungsgemäßen Verfahren gemäß einer ersten Ausführungsform der Erfindung ein Kaltband 1, welches beispielsweise eine Breite von 80 mm besitzt, von einem Coil 2 in Richtung des Pfeils 4 abgewickelt. Bei dem Kaltband 1 handelt es sich um ein Stahlband, dass zuvor in bekannter Weise durch mehrfaches Kaltwalzen und Rekristallisationsglühen eines als "Warmband" bezeichneten Stahlbandes erhalten wird, und welches durch den Walzvorgang eine erheblich höhere Festigkeit als das Warmband aufweist.

Das Kaltband kann beispielsweise eine Zugfestigkeit von 1.500 MPa aufweisen, bei einer Materialstärke von z. B. 1,2 bis 2 mm. Weitere mögliche Kaltband-Werkstoffe sind hochfeste Kaltbänder auf Basis von mikrolegierten Warmbändern mit ZE-Güten, Einsatzstähle, wie z. B. 22 MnB5 oder auch 16 MnCr5 sowie auch ein zwischenvergüteter C-Stahl, gegebenenfalls C60 bis C75.

In Ergänzung hierzu kommt als Kaltbandmaterial auch ein Mehrphasenstahl diverser Güten in Betracht.

Der Werkstoff als solcher wird bei dieser Ausführungsform der Erfindung entsprechend der maximal gewünschten Festigkeit (Rm) des entsprechenden Bereichs des aus dem Kaltband herzustellenden Formbauteils gewählt, und beträgt im Falle der eingangs erwähnten B-Säule z.B. 1.500 MPa.

Wie der Darstellung von Fig. 1a und 1b weiterhin entnommen werden kann, wird das Kaltband 1 über ein Zugwalzenpaar 6 einer Energiezufuhreinrichtung 8 zugeführt, welche das sich in diesem Falle bevorzugt mit einer konstanten Geschwindigkeit 4 bewegende Kaltband in einem ersten Bereich 10 erwärmt, um den Werkstoff lokal zu entspannen und hierdurch die Festigkeit im Falle der zuvor erwähnten B-Säule beispielsweise auf einen Wert von 500 MPa herabzusetzen.

Bei der in Fig. 1a gezeigten Ausführungsform der Erfindung umfasst die Energiezufuhreinrichtung 8 einen Brenner, der die Oberseite und die Unterseite des Kaltbandes 1 über entsprechende Düsen 12 mit einer Flamme bzw. einem Heißgasstrahl 14 beaufschlagt, wobei die Düsen 12 bevorzugt in Reihen angeordnet sind und sich über die gesamte Breite des Kaltbandes 1 hinweg erstrecken. Hierdurch können erste Bereiche 10 mit der gewünschten Breite auf dem Kaltband 1 erzeugt werden, wie dies bei der Ausführungsform von Fig. 3 angedeutet ist, die mit einer Vielzahl von reihenförmig in einem Array 15 angeordneten Düsen 12 arbeitet.

Nachdem das Kaltband 1 in den ersten Bereichen 10 erwärmt wurde, wobei die Temperatur in Abhängigkeit vom Grad der gewünschten Festigkeit des Materials in diesen ersten Bereichen 10 gewählt wird und gewünschtenfalls sogar im Bereich der Rekristallisationstemperatur des Materials liegen kann, wird das Kaltband 1 mit den darauf nacheinander lokal angeordneten ersten Bereichen 10 bevorzugt zu einem Coil 16 aufgewickelt.

Das Coil 16 wird im Anschluss daran beispielsweise mit einem Lkw zu einem Verarbeitungsbetrieb transportiert, in welchem dieses über ein Zugwalzenpaar 18 abgerollt und einer in Fig. 1b lediglich schematisch dargestellten mechanischen Umformeinrichtung 20 zugeführt wird. Die Umformeinrichtung 20 besitzt beispielsweise eine schematisch angedeutete, der Kontur des fertigen Formbauteils 22 entsprechende Negativform 20a sowie eine in die Negativ-Form 20a mit hohem Druck einpressbare Matrize oder Positivform 20b. Die Umformeinrichtung 20 formt das Kaltband 1 durch Einwirkung einer durch die Pfeile in Fig. 1b angedeuteten hohen mechanischen Kraft in das entsprechende Formteil 22 um, welches bei einer im Wesentlichen konstanten Materialstärke im ersten Bereich 10 eine geringere Festigkeit als in den übrigen Bereichen aufweist.

Das Abrollen des Coils 16 erfolgt bevorzugt getaktet und schubweise und wird durch eine nicht näher gezeigte Steuerungseinrichtung sowie entsprechende Sensoren gesteuert und überwacht. Der mechanischen Umformeinrichtung 20 ist ferner vorzugsweise ein in den Figu ren lediglich schematisch angedeutetes Schneidmesser oder Schlagmesser 24 zugeordnet, dass den im Bereich der Umformeinrichtung 20 befindlichen Abschnitt des Kaltbandes 1 bevorzugt vor der Durchführung des Umformvorgangs abtrennt.

Nach dem Abschluss des Umformprozesses und der Entnahme des endgültigen Formbauteils 22 aus der Negativ-Form 20a wird das Coil 16 dann weiter rotiert, um einen neuen Abschnitt des Kaltbandes 1 mit einem weiteren eingebrachten ersten Bereich 10 in die mechanische Umformeinrichtung 20 hinein vorzuschieben.

Es versteht sich in diesem Zusammenhang, dass die ersten Bereiche 10 bevorzugt in gleichmäßigen Abständen in das Kaltband 1 eingebracht werden, so dass die zur Herstellung der fertigen Formbauteile 22 benötigten Kaltbandabschnitte stets in der korrekten Position im Bereich der Negativ-Form 20a zu liegen kommen, welche der Position des ersten Bereichs 10 verminderter Festigkeit im fertigen Formbauteil 22 entspricht.

Ebenso ist es möglich, in der zuvor beschriebenen Weise zwei oder mehrere Bereiche 16 innerhalb ein und desselben Formbauteils 30 hinter- oder auch nebeneinander zu erzeugen.

Bei der in Fig. 2 gezeigten weiteren Ausführungsform des erfindungsgemäßen Verfahrens umfasst die Energiezufuhreinrichtung 8 eine Vielzahl von elektromagnetischen Spulen 114, die in mehreren Reihen in Form eines Arrays 115 an einer Fördereinrichtung 140 aufgenommen sind, welche ein umlaufendes Zugmittel in Form eines beispielhaft dargestellten Riemens 142 umfasst, der über nicht näher bezeichnete Umlenkrollen geführt ist. Die Umlaufgeschwindigkeit des Riemens 142 ist im Falle des Arrays 115 bevorzugt gleich der Geschwindigkeit des Kaltbandes 1, so dass durch gezieltes Bestromen der Spulen 114, die durch die Fördereinrichtung 140 parallel und in dichtem Abstand zur Oberseite des Kaltbandes 1 geführt werden, das Kaltband 1 in den ersten Bereichen 10 auf die gewünschte Temperatur erwärmt werden kann. Bei dieser Ausführungsform der Erfindung lässt sich durch den Einsatz eines Arrays 115 von Spulen 114 die Kontur des ersten Bereichs 116 im Vergleich zur ersten Ausführungsform von Fig. 1a, 1b auch in Querrichtung des Kaltbandes 1 sehr präzise begrenzen. Zugleich wird die Möglichkeit eröffnet, die Spulen 114 innerhalb des ersten Bereichs 10 für eine unterschiedliche Zeitdauer bzw. mit unterschiedlichen Stromstärken zu bestromen, so dass das Kaltbandmaterial unterschiedlich stark aufgeheizt wird und sich innerhalb des ersten Bereichs 10 Teilbereiche mit unterschiedlichen Festigkeiten erzeugen lassen. So kann z.B. die Festigkeit in einem Bereich 10 ausgehend vom Rand desselben sukzessive bis zu dessen Mitte hin verringert und im Anschluss daran wieder bis auf die ursprüngliche Festigkeit des Kaltbandmaterials hin erhöht werden, um ein besonders vorteilhaftes Umformverhalten des Materials zu erhalten.

Schließlich kann es bei einer weiteren alternativen Ausführungsform des erfindungsgemäßen Verfahrens vorgesehen sein, eine Energiezufuhreinrichtung 8 einzusetzen, welche anstelle einer Wärmequelle eine Kühleinrichtung 216 umfasst, die bevorzugt eine Reihe von Düsen 212 aufweist, die das Kaltband 1 in zweiten Bereichen 230 höherer Festigkeit mit einem Kühlmedium beaufschlagen, beispielsweise mit Luft oder einer geeigneten Kühlflüssigkeit wie insbesondere Wasser oder Öl. Die Düsen 212 sind hierbei gemäß der Darstellung von Fig. 4 bevorzugt
ebenfalls in mehreren Reihen in einem Array 215 angeordnet und können entweder stationär oder aber in gleicher Weise wie in Fig. 2 gezeigt über eine Fördereinrichtung parallel zur Oberfläche des Kaltbandes 1 bewegt werden. Das in Zusammenhang mit den Fig. 1a, 1b und 2 Gesagte gilt entsprechend auch für diese Ausführungsform der Erfindung.

Um die zweiten Bereiche 230 auf dem Kaltband 1 zu erzeugen, wird dieses im Gegensatz zu den zuvor beschriebenen Ausführungsformen der Erfindung nach dem Abkühlen beispielsweise induktiv oder konduktiv in einem Durchlaufofen 217 erwärmt, um die Festigkeit des zuvor kalt gewalzten Kaltbandmaterials insgesamt auf einen Wert zu verringern, der im fertigen Formbauteil 22 den Bereichen mit der minimalen Festigkeit, bzw. der größten Elastizität entspricht.

So ist es beispielsweise möglich, das Kaltbandmaterial nach dem Kaltwalzvorgang im Durchlaufofen 217 bis auf eine Temperatur nahe der Rekristallisationstemperatur von ca. 750 Grad zu erhitzen, und im Anschluss daran durch gezieltes Einblasen von Kühlluft über die Kühleinrichtung 216 zweite Bereiche 230 zu schaffen, in denen das Material eine höhere Festigkeit aufweist als in den übrigen Bereichen.

Nachdem die Bereiche 230 in der zuvor beschriebenen Weise mit der gewünschten Kontur erzeugt worden sind, wird das Kaltband 1 bevorzugt ebenfalls zu einem Coil 16 aufgewickelt und in der zuvor im Zusammenhang mit Fig. 1b beschriebenen Weise über eine mechanische Umformeinrichtung 20 zum fertigen Endbauteil 22 umgeformt, wobei in diesem Falle jedoch lediglich die zweiten Bereiche 230 eine erhöhte Festigkeit besitzen.

## Patentansprüche

1. Verfahren zur Herstellung eines Formbauteils (22) mit Bereichen unterschiedlicher Festigkeit (10, 230) aus Kaltband (1), wobei das Kaltband (1) durch Kaltwalzen. Rekristallisationsglühen und Abkühlen von Stahlband erhalten wird und nach dem Abkühlen über seine Länge hinweg eine konstante Dicke und Festigkeit aufweist, und wobei das Formbauteil (22) durch einen mechanischen Umformprozess aus dem Kaltband (1) erhalten wird, wobei das Kaltband (I) nach dem Ahkühlen und vor dem mechanischen Umformprozess in einem ersten Bereich (10), der einem Bereich des Formbauteils (22) mit einer geringeren Festigkeit entspricht, lokal über eine Energiezufuhreirichtung (8) mit thermischer Energie beaufschlagt wird, oder das Kaltband (1) nach dem Abkühlen in einem Ofen (217) insgesamt oder partiell erneut erwärmt wird, bevorzugt bis in den Bereich der Rekristallisationstemperatur, und das erneut erwärmte Kaltband (1) durch eine Energiezufuhreinrichtung, die eine Kühleinrichtung (216) umfasst, in einem zweiten Bereich (230) lokal mit einem Kühlmedium beaufschlagt wird, um die Festigkeit im zweiten Bereich (230) zu erhöhen,
**dadurch gekennzeichnet,**
**dass** das Kaltband (1) mit einer vorgegebenen Geschwindigkeit bewegt wird, und dass die Energiezufuhreinrichtung (8) über eine Fördereinrichtung (140) parallel zur Oberseite des Kaltbandes mit dem Kaltband (1) mitbewegt wird, um das laufende Kaltband lokal mit thermischer Energie zu beaufschlagen.

2. Verfahren nach Anspruch 1,
**dadurch gekennzeichnet,**
**dass** die Energiezufuhreinrichtung (8) elektromagnetische Spulen (214) umfasst, die nahe der Oberfläche auf wenigstens einer Seite des Kaltbandes (1) angeordnet sind und das abgekühlte Kaltband (1) im ersten Bereich induktiv oder konduktiv erwärmen.

3. Verfahren nach Anspruch 2,
**dadurch gekennzeichnet,**
**dass** mehrere Spulen (114) in einem Array (115) angeordnet sind, welches sich in Querrichtung zumindest über einen Teil der Breite des Kaltbandes (1) hinweg erstreckt, und dass die Spulen (114) entsprechend der Form des ersten Bereichs (10) für eine vorgegebene Zeitdauer bestromt werden, um das abgekühlte Kaltband im ersten Bereich (10) lokal zu erwärmen.

4. Verfahren nach Anspruch 1,
**dadurch gekennzeichnet,**
**dass** die Energiezufuhreinrichtung (8) einen Brenner umfasst, der nahe der Oberfläche auf wenigstens einer Seite des Kaltbandes (1) angeordnet ist und der das Kaltband nach dem Abkühlen im ersten Bereich (10) lokal thermisch erwärmt.

5. Verfahren nach Anspruch 1,
**dadurch gekennzeichnet,**
**dass** die Kühleinrichtung (216) eine Anordnung von Düsen (212) umfasst, welche das erwärmte Kaltband (1) im zweiten Bereich (230) lokal mit einem Kühlgas, insbesondere mit gekühlter Luft und/oder mit einer Kühlflüssigkeit, insbesondere mit Wasser oder Öl, beaufschlagen.

6. Verfahren nach einem der Ansprüche 1 bis 5,
**dadurch gekennzeichnet,**
**dass** die Fördereinrichtung (140) ein endloses umlaufendes Zugmittel (142) umfasst, an welchem die Energiezufuhreinrichtung (8) aufgenommen ist.

## Claims

1. Method for producing a formed component (22) with areas of varying strength (10, 230) from cold rolled strip (1), wherein the cold rolled strip (1) is obtained from steel strip by cold rolling, recrystallisation annealing and cooling down and, after cooling down, exhibits a constant thickness and strength right along its length, and wherein the formed component (22) is obtained by a mechanical forming process from the cold rolled strip (1), wherein thermal energy is applied locally to the cold rolled strip (1), after cooling down and before the mechanical forming process, by an energy application device (8) in a first area (10) corresponding to an area of the formed component (22) with lower strength, or the cold rolled strip (1), after cooling down, is reheated either partially or totally in a furnace (217), preferably into the range of the recrystallisation temperature, and an energy application device (8) which comprises a cooling device (216) applies a cooling medium locally to the reheated cold rolled strip (1) in a second area (230) in order to increase the strength in the second area (230),
**characterised in that**
the cold rolled strip (1) is moved at a prescribed speed and that the energy application device (8) is moved by a conveyor device (140) with the cold rolled strip (1) parallel to the upper side of the cold rolled strip (1) in order to apply thermal energy locally to the moving cold rolled strip.

2. Method according to claim 1,
**characterised in that**
the energy application device (8) comprises electromagnetic coils (214) that are arranged near the surface of at least one side of the cold rolled strip (1) and the cooled down cold rolled strip (1) is heated in the first area inductively or conductively.

3. Method according to claim 2,
**characterised in that**
several coils (114) are arranged in an array (115) that extends transversely at least across one part of the width of the cold rolled strip (1) and that current is applied to the coils (114) corresponding to the shape of the first area (10) for a prescribed time in order to heat up the cooled down cold rolled strip locally in the first area (10).

4. Method according to claim 1,
**characterised in that**
the energy application device (8) comprises a burner which is arranged near the surface of at least one side of the cold rolled strip (1) and which heats the cold rolled strip (1), after cooling down, locally in the first area (10).

5. Method according to claim 1,
**characterised in that**
the cooling device (216) comprises an arrangement of nozzles (212) which apply a cooling gas, in particular with cooled air and/or with a cooling fluid, in particular with water or oil, locally to the heated cold rolled strip (1) in the second area (230).

6. Method according to one of claims 1 to 5,
**characterised in that**
the conveyor device (140) comprises an endless circulating means of traction (142) to which the energy application device (8) is attached,

## Revendications

1. Procédé de fabrication d'un composant moulé (22) doté de zones de résistance différente (10, 230) à partir d'une bande à froid (1), la bande à froid (1) étant obtenue par laminage à froid, recuit de recristallisation et refroidissement d'une bande d'acier et présentant après le refroidissement une épaisseur et une résistance constantes sur toute sa longueur, et le composant moulé (22) étant obtenu par un processus de déformation mécanique à partir de la bande à froid (1), la bande à froid (1), après le refroidissement et avant le processus de déformation mécanique, recevant localement, par l'intermédiaire d'un dispositif d'alimentation en énergie (8), de l'énergie thermique dans une première zone (10) correspondant à une zone de moindre résistance du composant moulé (22), ou la bande à froid (1), après le refroidissement, étant réchauffée entièrement ou partiellement dans un four, de préférence jusque dans le domaine de la température de recristallisation, et la bande à froid (1) réchauffée recevant localement dans une deuxième zone (230) un fluide de refroidissement par un dispositif d'alimentation en énergie comprenant un dispositif de refroidissement (216), afin d'augmenter la résistance dans la deuxième zone (230),
**caractérisé en ce que**
la bande à froid (1) se déplace à une vitesse prédéfinie, et **en ce que** le dispositif d'alimentation en énergie (8) se déplace en même temps que la bande à froid (1) parallèlement à la face supérieure de celle-ci par l'intermédiaire d'un dispositif de transport (140), afin d'alimenter la bande à froid en mouvement localement en énergie thermique.

2. Procédé selon la revendication 1,
**caractérisé en ce que**
le dispositif d'alimentation en énergie (8) comprend des bobines électromagnétiques (214), qui sont disposées sur au moins un côté de la bande à froid (1) à proximité de la surface et qui chauffent la bande à froid (1) refroidie dans la première zone par induction ou par conduction.

3. Procédé selon la revendication 2,
**caractérisé en ce que**
plusieurs bobines (114) sont agencées en un réseau (115) qui s'étend dans le sens transversal au moins sur une partie de la largeur de la bande à froid (1), et **en ce que** les bobines (114) sont alimentées en courant pour une durée prédéfinie en fonction de la forme de la première zone (10), afin de chauffer la bande à froid refroidi localement dans la première zone (10).

4. Procédé selon la revendication 1,
**caractérisé en ce que**
le dispositif d'alimentation en énergie (8) comprend un brûleur, qui est disposé sur au moins un côté de la bande à froid (1) à proximité de la surface et qui chauffe la bande à froid (1) après le refroidissement localement dans la première zone (10).

5. Procédé selon la revendication 1,
**caractérisé en ce que**
le dispositif de refroidissement (216) comprend un ensemble de buses (212) lesquelles alimentent la bande à froid (1) réchauffée, localement dans la deuxième zone (230), avec un gaz de refroidissement, en particulier avec de l'air refroidi, et/ou avec un liquide de refroidissement, en particulier avec de l'eau ou de l'huile.

6. Procédé selon l'une des revendications 1 à 5,
**caractérisé en ce que**
le dispositif de transport (140) comprend un moyen de traction continue sans fin (142) logeant le dispositif d'alimentation en énergie (8).
